# EUROPEAN PATENT APPLICATION

(11) **EP 1 445 972 A1**
(43) Date of publication of application: **11.08.2004**
(21) Application number: 02772979.7
(22) Date of filing: 07.10.2002
(51) Int. Cl.: H04Q 9/00

(54) **CONTROL SERVER AND REMOTE CONTROL SYSTEM FOR THE SAME**

(30) Priority: 05.10.2001 JP 2001310090
(71) Applicant: NEC Corporation, Minato-ku, Tokyo 108-8001 (JP)
(72) Inventor: NAKAJI, Hiroshi, NEC CORPORATION, Minato-ku, Tokyo 108-8001 (JP); NYU, Takayuki, NEC CORPORATION, Minato-ku, Tokyo 108-8001 (JP)
(74) Representative: Moir, Michael Christopher
(86) International application number: PCT/JP2002/010405
(87) International publication number: WO 2003/032675

(57) **Abstract**

A remote control system includes a plurality of control object terminals connected with the first network, a control server connected the first network and a second network to control the control object terminal and a remote control terminal connected with the second network. The remote control terminal issues a control request for a specific terminal of the plurality of control object terminals to the control server through the second network. The control server identifies the remote control terminal uniquely in response to the control request and carries out the control request in place of the remote control terminal when the remote control right of the specific terminal is allocated to the remote control terminal.

## Description

### Technical Field

The present invention relates to a remote control system which controls information home electronics terminals which are connected with IEEE 1394 network (IEEE Std 1394-1995; a high-speed serial bus standardized in IEEE Standard for a High Performance Serial Bus, and called 1394 network hereinafter), and a control server used in it.

### Background Art

First, the outline of a 1394 network and an exclusive control technique in the 1394 network will be described below. Also, problems of a conventional remote control in a 1394 network to which the present invention should be applied and problems when a conventional exclusive control technique is applied to the conventional remote control technique will be described.

In the 1394 network, a synchronous transfer mode and an asynchronous transfer mode are prescribed as data transfer modes. The synchronous transfer mode is used for signal transmission and reception in applications such as video image data and music data in which real time processing is required, and the asynchronous transfer mode is used for signal transmission and reception for a control signal and best effort of IP communication.

In the synchronous transfer mode, a logical connection called a connection is established between a transmitter side terminal and a receiver side terminal. A plurality of connections can be established, and a channel number is allocated to each of the connections and is identified. There are two kinds of connections, i.e., a broadcast connection and a point-to-point connection.

In the 1394 network, the broadcast connection is used like an ad hook connection because the broadcast connection can be established and released from any terminals connected with the 1394 network. Connection data is distributed into and managed by the transmitter side terminal and the receiver side terminal. The transmitter side terminal manages only the number of a channel on which a signal is transmitted regardless of the existence of the receiver side terminal and the number of receiver side terminals. In the same way, the receiver side terminal manages only the number of the channel from which the signal is received.

Only the terminal which has set a point-to-point connection can change the setting of the connection and a relation of the transmitter side terminal and the receiver side terminal is guaranteed. The connection data is distributed into and managed by the transmitter side terminal and the receiver side terminals. The transmitter side terminal manages the number of receiver side terminals and the number of a channel on which the signal is transmitted. The receiver side terminal manages the number of the channel from which the signal is received.

There are two kinds of setting, i.e., establishment and overlay for the setting of a point-to-point connection. The setting is referred to as the establishment in case that the transmitter side terminal in the point-to-point connection is not used as the transmitter side terminal in another point-to-point connection, and is referred to as the overlay in case that the transmitter side terminal in the point-to-point connection is already used as the transmitter side terminal in another point-to-point connection. In case of the establishment, the channel number can be freely chosen from empty channel numbers, but in case of the overlay, the same channel number as the already set point-to-point connection is used (refer to IEC 61883 Consumer Audio/Video Equipment Digital Interface for the details). Hereinafter, the point-to-point connection is referred to simply as a connection.

A command set (hereinafter, to be referred to as AV/C command set) to control an AV terminal connected with the 1394 network is defined by 1394 Trade Association. By using the AV/C command set, the controls of operations of the AV terminal such as replay and stop are possible.

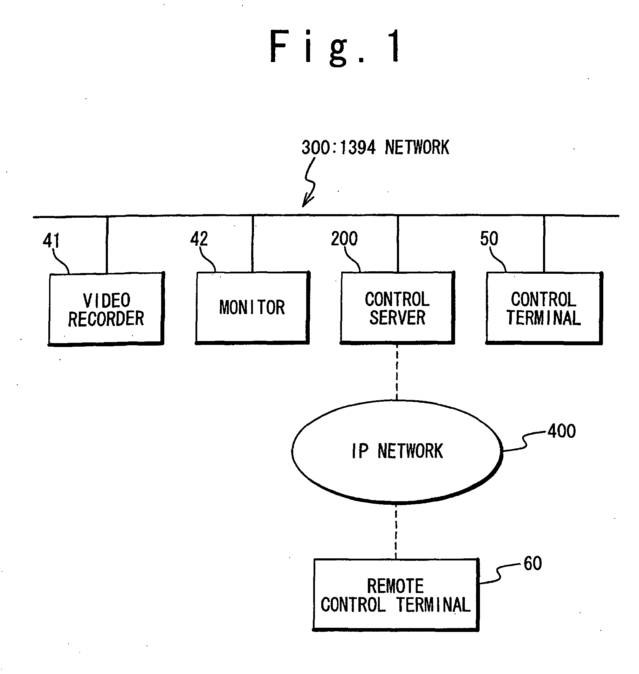

However, in the standard of the AV/C command set, only a format is defined and a use procedure and so on are not defined. For this reason, it could be considered that the AV terminal executes the AV/C command without confirming a request source of the command when the AV terminal receives the AV/C command. Therefore, for example, when the 1394 network 300 is configured as shown in Fig. 1, it is possible for the third party to stop the video recorder 41 by using the AV/C command from a control terminal 50 when a user is viewing a video image from the video recorder 41 by a monitor 42. At this time, a problem of obstruction of the viewing occurs.

To solve such a problem, it is necessary to introduce a right possible to control a specific terminal exclusively, i.e. a control right. A conventional technique to manage the control right of 1394 network terminal is described in Japanese Laid Open Patent Application (JP-P2001-045030A). In this conventional technique, the control right is acquired and released based on the setting and release of a point-to-point connection. A conventional scheme of managing the control right will be described below.

Each of control terminals manages control right queues provided for control object terminals. When a connection is set, an identification number (ID) of a terminal that has set the connection is written at the end of the control right queues for the transmitter side terminal and the receiver side terminal. When the connection is released, the ID of the terminal that has set the connection is deleted from the control right queues for the transmitter side terminal and the receiver side terminal. At this time, the control terminal having the identification number (ID) which is present at the head of the control right queue has the control right of the control object terminal corresponding to the control right queue.

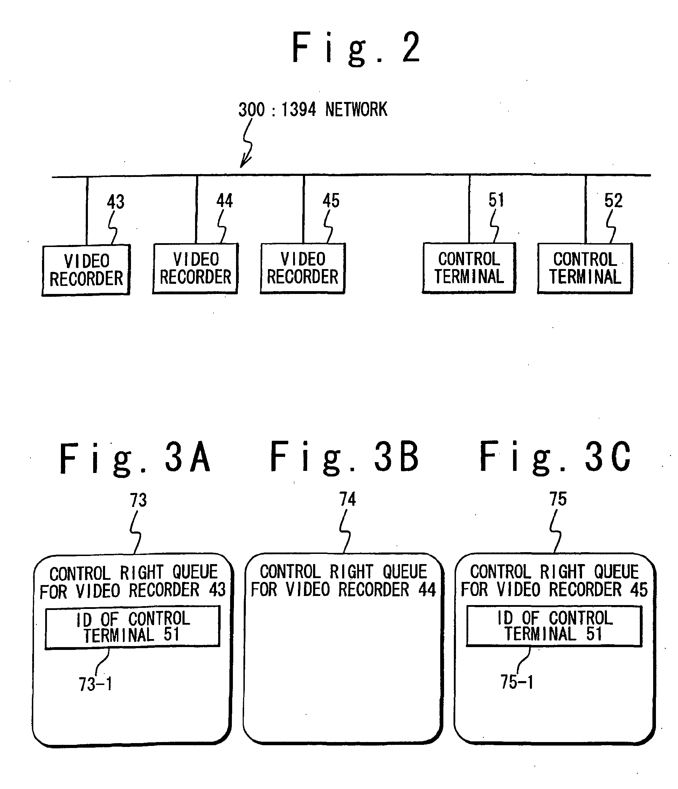

The control right management using the control right queue will be described using a specific example. Fig. 2 shows a conventional network configuration used in the following description. In Fig. 2, three video recorders 43 to 45 as the control object terminals and two control terminals 51 and 52 are connected with a 1394 network 300.

Figs. 3A to 3C show the states of the control right queues to the respective control object terminals when the control terminal 51 has set connections with the video recorder 43 and the video recorder 45. The ID 73-1 of the control terminal 51 which has set the connection is stored in the control right queue 73 for the video recorder 43 and the control right queue 75 for the video recorder 45. At this time, the control rights of the video recorders 43 and 45 are allocated to the control terminal 51 whose ID is written at the head of each of the control right queues 73 and 75.

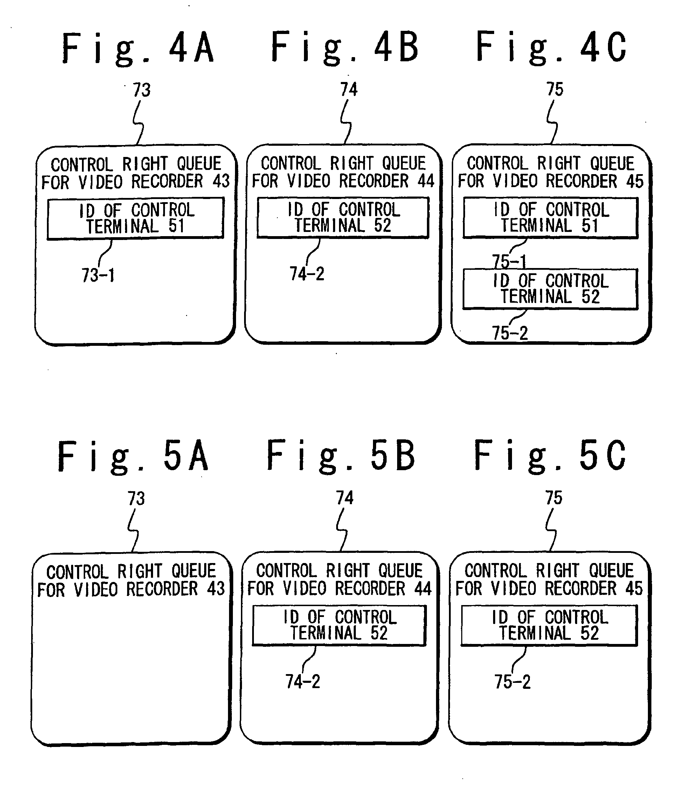

In the states shown in Figs. 3A to 3C, if the control terminal 52 sets connections with the video recorder 44 and the video recorder 45, the respective control right queues change to the states shown in Figs. 4A to 4C. At this time, the control rights of the video recorder 43 and the video recorder 45 are allocated to the control terminal 51 and the control right of the video recorder 44 is allocated to the control terminal 52.

In the states shown in Figs. 4A to 4C, if the control terminal 51 releases the point-to-point connections with the video recorder 43 and the video recorder 45, the ID 73-1 of the control terminal 51 is deleted from the control right queues 73 and 75, and the respective control right queues change to the states shown in Figs. 5A to 5C. At this time, the control rights of the video recorder 44 and the video recorder 45 are allocated to the control terminal 52 whose ID is written at the head of each of the control right queues 44 and 45.

In the above situation, there are the following problems in the conventional remote control in the 1394 network and the conventional exclusive control applied with the conventional remote control.

Generally, since the 1394 network is often built around AV terminals in a room of a house, a mechanism for the remote control through another network is needed to control the 1394 network from another room or the outside of the house. Fig. 1 shows a realization example of the remote control in a 1394 network through an IP network. In the network configuration of Fig. 1, a control server 200 is arranged between the 1394 network 300 and the IP network 400, and communicates with a remote control terminal 60 through the IP network 400. Thus, the control server carries out a control request from the remote control terminal 60, and the remote control terminal 60 is possible to control and the 1394 network and the control object terminal connected with the 1394 network.

The above control right management described in Japanese Laid Open Patent Application (JP-P2001-045030A) is effective, when the control server and the remote control terminal has one-to-one correspondence, as shown in Fig. 1. That is, it is permitted to consider that the control from the remote control terminal 60 is possible only when the control server 200 has the control right.

However, there are the following problems in the conventional technique when the above-mentioned control server and the remote control terminal are connected through the network.

First, in the conventional remote control system, there is a problem that an exclusive control from a plurality of remote control terminals through the control server is impossible.

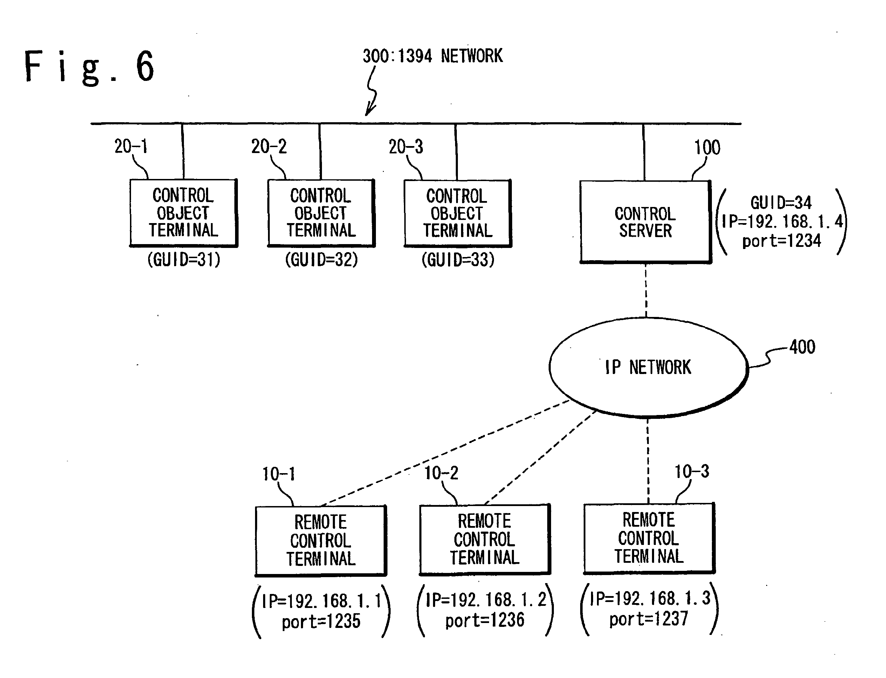

In the exclusive control using the conventional control right, the exclusive control every terminal directly connected with the 1394 network is possible. In the conventional remote control system, it is the control server that is directly connected with the 1394 network, and the control from the remote control terminal is realized through the control server. However, in the conventional exclusive control, it is impossible to identify each of the remote control terminals and the exclusive control among the remote control terminals is impossible. For example, a network configuration shown in Fig. 6 is supposed. Remote control terminals 10-1 and 10-2 issue requests to the control server 100 connected through a network such as an Ethernet other than the 1394 network. In this case, the remote control of the control object terminal 20-1 is possible. However, at this time, when a user A of the remote control terminal 10-1 starts a recording operation using the control object terminal 20-1 and then a user B of the remote control terminal 10-2 stops the recording operation of the control object terminal 20-1, the control by the user A of the remote control terminal 10-1 becomes invalid.

Second, in the conventional remote control system, there is a problem that the exclusive control for each of a plurality of applications is impossible. In other words, in the exclusive control using the conventional control right, there is a problem that the plurality of application programs can not be identified in addition to the first problem when the plurality of application programs exist in the control terminal. There is a same problem as the above in case of the control of the control object terminal from the application programs of each control terminal in the 1394 network, in addition to the control from the remote control terminal.

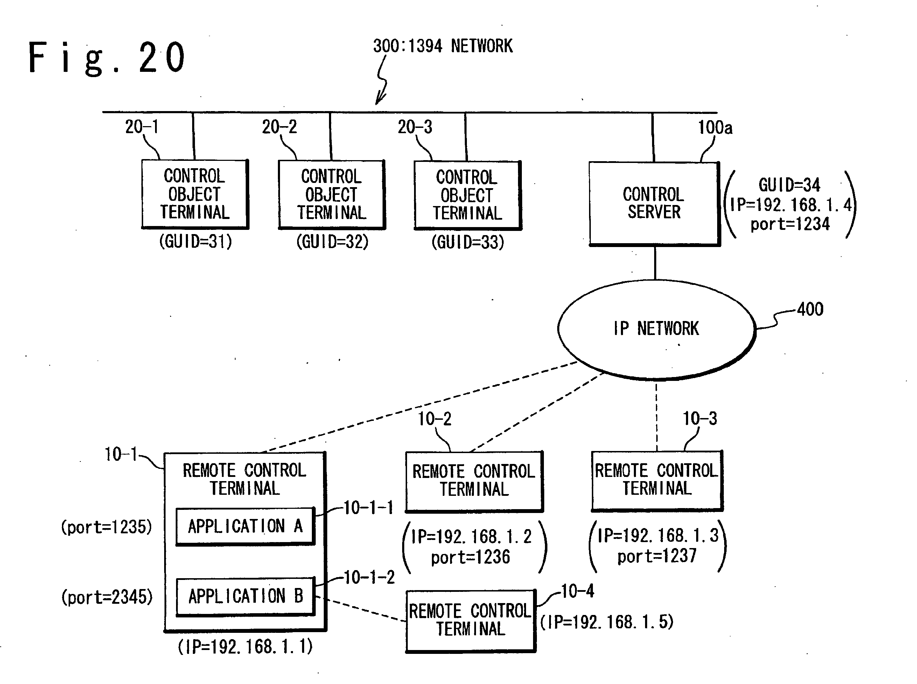

For example, a configuration shown in Fig. 20 is supposed. A remote control application program 10-1-1 and a remote control application program 10-1-2 are executed for the remote control on the remote control terminal 10-1. The remote control application program 10-1-1 communicates with the control server 100a based on the control from a user interface on the remote control terminal 10-1. The remote control application program 10-1-2 receives a request from another remote control terminal 10-4 and communicates with the control server 100a. In this case, the exclusive control does not function between the remote control terminal 10-1 and the remote control terminal 10-4. As a result, the exclusive controls to the control object terminals 20-1 to 20-3 can not be identified between these remote control terminals. For example, when the control object terminal is accessed by one of the remote control terminals, access to the control object terminal by another remote control terminal can not be prohibited.

Third, even if the above-mentioned problem has been solved, a new problem arises that the control object terminal which is controlled by one of the application programs can not be controlled by another application program while the same user intends to control the control object terminal using the application programs, because a function is not provided to individually identify the controls of the control object terminal from the plurality of remote control terminals and the plurality of application programs.

For example, even when a first user who controls the control object terminal using a first application program for to remote control, and a second user who controls the control object terminal' using a second application program for remote control are same, the exclusive control functions individually to permit the control of the control object terminal from only one application program.

Fourth, in the conventional remote control system, the exclusive control could not be reserved.

For example, when a recording operation of a video recorder is reserved from a remote control terminal, the exclusive control from a recording start time to a recording end time is necessary. In this case, the exclusive control is not necessary before the recording start time and after the recording end time. However, conventionally, it is necessary to carry out the exclusive control by the remote control terminal which reserved the recording operation, even in these time during which the exclusive control is not necessary, in order to realize the exclusive control during the recording time.

Fifth, in the conventional remote control system, convenience is lost when a plurality of control servers exist.

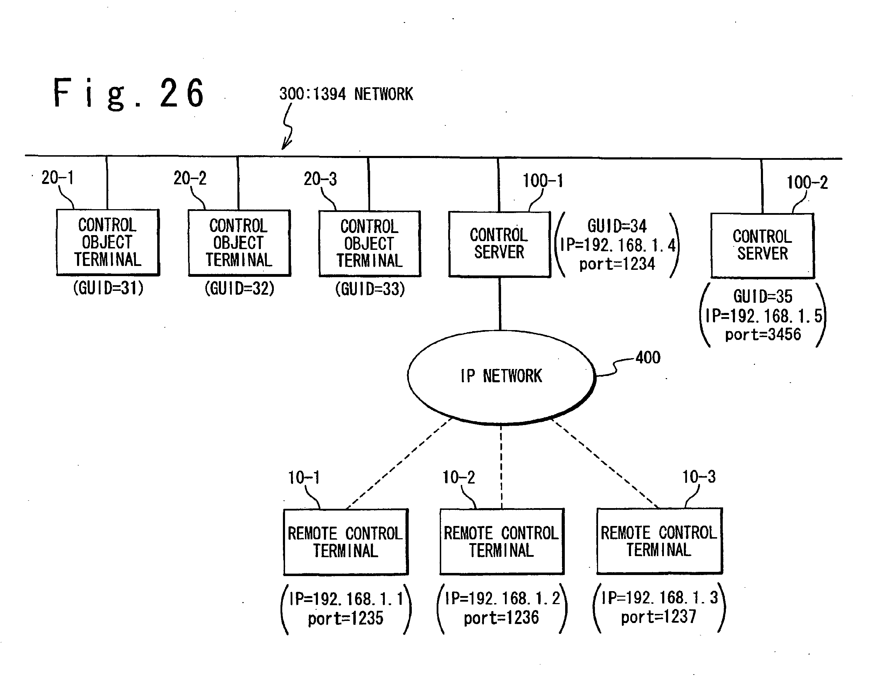

For example, a network configuration as shown in Fig. 26 is supposed. In this case, three control object terminals 20-1 to 20-3 and two control servers 100-1 and 100-2 are connected with the 1394 network 300 of Fig. 26. The control server 100-1 and the remote control terminal 10-1 are connected via the IP network 400. In this case, when the remote control terminal ends the control using the control server 100-2 in the state that a point-to-point connection to the control object terminal 20-1 is set, the control server 100-1 can not get a control right and the remote control terminal 10-1 can not control the control object terminal 20-1.

Sixth, in the conventional remote control system, when the control object terminal has a plurality of subunits which function independently, there is no scheme of carrying out exclusive control every subunit.

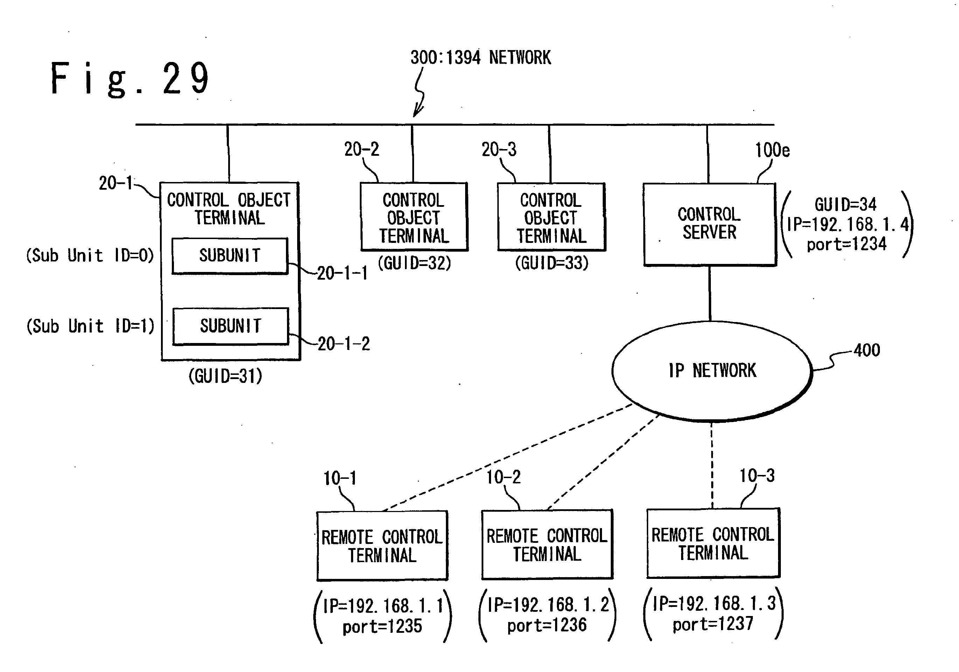

For example, a network configuration shown in Fig. 29 is supposed. The control object terminal 20-1 which is connected with the 1394 network 300 has the subunits 20-1-1 and 20-1-2 which have independent functions.

In the conventional method which carries out the exclusive control every terminal, in case that the remote control terminal 10-1 uses the function 20-1-1 of the control object terminal 20-1 and the remote control terminal 10-2 uses the function 20-1-2 of the control object terminal 20-1, only one of the remote control terminals could carry out the exclusive control to one control object terminal in spite that both functions are independent.

### Disclosure of Invention

Therefore, an object of the present invention is to provide a remote control system, and a control server used in it, in which it is possible to carry out exclusive remote control of a control object terminal appropriately from each of remote control terminals when the remote control terminals exist in remote control of control object terminal with a 1394 interface.

Another object of the present invention is to provide a remote control system, and a control server used in it, in which the remote control of a control object terminal with a 1394 interface can be carried out for every application program in a remote control terminal.

Another object of the present invention is to provide a remote control system, and a control server used in it, in which a same user who controls a plurality of application programs can carry out the remote control of a control object terminal in the remote control system of the control object terminal with a 1394 interface.

Another object of the present invention is to provide a remote control system, and a control server used in it, in which a time for the exclusive remote control can be reserved in a remote control system of the control object terminal with a 1394 interface.

Another object of the present invention is to provide a remote control system, and a control server used in it, in which when a plurality of control servers exist in one network, the remote control to all of control object terminals can be carried out through communication with one of control servers, in the remote control system of the control object terminal with a 1394 interface.

Another object of the present invention is to provide a remote control system, and a control server used in it, in which the exclusive control can be carried out for each of subunits of a control object terminal in the remote control system of the control object terminal with a 1394 interface.

In an aspect of the present invention, a remote control system includes a plurality of control object terminals connected with a first network; a control server connected with the first network and a second network to control the plurality of control object terminals; and a remote control terminal connected with the second network. The remote control terminal issues a control request for a specific terminal as one of the plurality of control object terminals to the control server through the second network. The control server identifies the remote control terminal uniquely in response to the control request and determines whether the remote control terminal has a remote control right for exclusive control of resources of the first network and the specific terminal as an object and carries out the control request only when the remote control terminal has the remote control right.

Also, in the remote control system, when the remote control terminal requests the setting of a point-to-point connection to the control server, the remote control right is allocated to the remote control terminal. Here, when the remote control right is already allocated to another remote control terminal, the remote control right is not allocated immediately and the remote control terminal waits that the remote control right is allocated.

Also, in the remote control system, when the remote control terminal requests release of the point-to-point connection to the control server and the remote control terminal ends communication with the control server, it is determined that the remote control right to have been allocated to the remote control terminal has been lost. When the remote control right of the specific terminal allocated to the remote control terminal has been lost, the remote control right is allocated to another remote control terminal which is in the state that the other remote control terminal is waiting for the remote control right of the terminal.

Here, the control server includes a remote control terminal data management section which manages identification data of the remote control terminal, a network data management section and a remote control right management section. The network data management section manages terminal data showing whether or not the control server has the control right of each of the plurality of control object terminals and network data about connection when the control server controls each of the plurality of control object terminals. The remote control right management section has a remote control right management table which stores data of the remote control right of each of the plurality of control object terminals, and manages the remote control right possessed by the remote control terminal for every terminal based on identification data, the terminal data of the remote control terminal and the network data using the remote control right management table. In this case, the remote control right management section registers the identification data of the remote control terminal on the remote control right management table corresponding to each terminal in order when a point-to-point connection setting request is received from the remote control terminal and permits the exclusive remote control in order of the reception of the point-to-point connection setting requests.

Also, when the remote control terminal executes each of a plurality of application programs and issues the control request to the control server, the control server identifies each of the plurality of application programs uniquely and may allocate the remote control right to permit the exclusive remote control of the specific terminal for every application.

Also, the control server carries out verification of a user of the remote control terminal and generates verification data, registers the verification data of the user on the remote control right management table together with the remote control right and permits the exclusive remote control every the user based on the remote control right management table.

Also, the control server registers a release time showing the time when the exclusive control is ended, on the remote control right management table in addition to the remote control right every terminal. When the release time is registered, the control server maintains the remote control right until the release time and may release the remote control right after the release time.

Also, supposing that another control server connected with the first network exists, and the other control server has the remote control right of the specific terminal, when receiving the control request for the specific terminal, the control server issues the control server control request to the other server. When the other control server allocates the remote control right to the control server, the control server may allocate the remote control right to the remote control terminal based on the remote control right from the other control server.

Also, when each of the plurality of control object terminals has a plurality of subunits, the control server identifies each of the plurality of subunits of each of the plurality of control object terminals uniquely and may manage the remote control right for every subunit of each terminal.

Also, the first network may be a 1394 network.

Also, the second network may be an IP network.

In another aspect of the present invention, a control server has a remote control right management table which stores remote control rights of each of a plurality of control object terminals. The control server is connected with a first network and a second network, the plurality of control object terminals are connected with the first network and a remote control terminal is connected with the second network. At this time, the control server identifies the remote control terminal uniquely in response to a request to set a point-to-point connection with a specific terminal as one of the plurality of control object terminals from the remote control terminal through the second network and allocates the remote control right to the remote control terminal to permit an exclusive remote control to the specific terminal and registers the remote control right on the remote control right management table.

Here, the control server may be composed of a remote control terminal data management section which manages the identification data of the remote control terminal, a network data management section and a remote control right management section. The network data management section manages terminal data showing whether or not the control server has a control right of each of the plurality of control object terminals and network data about the connection when the control server controls each of the plurality of control object terminals. The remote control right management section manages the remote control right of the remote control terminal for every terminal based on the identification data, the terminal data of the remote control terminal and the network data using the remote control right management table. In this case, the remote control right management section registers the remote control right that is allocated to the remote control terminal in the remote control right management table in order of reception of point-to-point connection setting requests from the remote control terminals and may permit an exclusive remote control in the order of the reception of the control requests.

Also, when the remote control terminal executes each of a plurality of application programs and issues the control request to the control server, the control server identifies each of the plurality of application programs uniquely and may allocate the remote control right for every application program to permit the exclusive remote control to the specific terminal.

Also, the control server verifies a user of the remote control terminal and generates verification data, registers the verification data of the user on the remote control right management table together with the data of the remote control right and may permit the exclusive remote control for every user based on the remote control right management table.

Also, the control server registers a release time showing the time when the exclusive control is ended, to the remote control right management table in addition to the remote control right for every control object terminal. When the release time is registered, the control server maintains the remote control right until the release time and may release the remote control right after the release time.

Also, when another control server connected with a first network has the remote control right of the specific terminal, the control server issues the control request to the other control server when receiving the control request for the specific terminal. When the remote control right is allocated to the control server from the other control server, the control server may allocate the remote control right to the remote control terminal based on the remote control right from the other control server.

Also, when each of the plurality of control object terminals has a plurality of subunits, the control server identifies each of the plurality of subunits of each of the plurality of control object terminals uniquely and may manage the remote control right for every subunit of each terminal.

Also, the first network may be a 1394 network.

Also, the second network may be an IP network.

In another aspect of the present invention, a remote control terminal includes a network management section which can control a first network and a plurality of control object terminals which are connected with the first network, through a second network and a control server, and manages terminal data about the plurality of control object terminals which are connected with the first network, a control server data management section which manages data about the control server, an interface section which receives a control request from a user based on the terminal data, a communication section which transmits the control request to the control server through the second network based on the control server data and receives a response from the control server.

In another aspect of the present invention, a remote control method is achieved by (a) a control server providing the data of a plurality of control object terminals which are connected with a first network and the first network, by (b) a remote control terminal issuing a control request to the first network or the terminals to the control server through a second network, by (c) the control server identifying the remote control terminal uniquely in response to a point-to-point connection setting request and allocating the remote control right to the remote control terminal to permit an exclusive remote control to the terminal, by (d) the control server managing the remote control right using a remote control right management table, and by (e) the control server permitting the control of the specific terminal from the remote control terminal using the remote control right management table.

The step (a) includes a step of managing terminal data showing whether or not the control server has the control right of each of the plurality of control object terminals and network data about the connection with the plurality of control object terminals. The step (d) includes a step of managing identification data of the remote control terminal, and a step of managing the remote control right of the remote control terminal for every terminal based on the identification data, the terminal data of the remote control terminal and the network data using a remote control right management table.

Also, the step (d) may includes a step of the control server registering the remote control terminal identifier on the remote control right management table in order of reception of a point-to-point connection setting request from the remote control terminal.

Also, the step (d) may includes deletes the remote control terminal identifier from the remote control right management table when the control server receives a point-to-point connection release request from the remote control terminal.

Also the step (d) may includes a step of determining that the remote control right is allocated to the remote control terminal whose identifier is registered on the head of the remote control right management table.

Also, the step (e) may include a step of refusing a control request when the remote control terminal issues the control request for the terminal when the remote control terminal does not have the remote control right.

Also, the step (b) may include a step of the remote control terminal executing each of a plurality of application programs to issue the control request to the control server. In this case, the step (c) may include step of the control server identifying each of the plurality of application programs uniquely and giving the remote control right of the specific terminal for every application program.

Also, when the remote control method further include a step (f) of the control server generating verification data by verifying the remote control terminal user, the step (d) may include a step of the control server registering the verification data of the user on the remote control right management table together with the remote control right to permit the exclusive remote control for every user based on the remote control right management table.

Also, when the remote control method further includes a step (g) of transmitting a release time showing a time when the remote control terminal ends the exclusive control to the control server, the step (d) may include a step of the control server registering the release time on the remote control right management table to maintain the remote control right until the release time when the release time is registered, and to release the remote control right after the release time.

Also, when the step (a) further includes a step of providing another control server which is connected with the first network, and the other control server has the remote control right of the specific terminal, the step (c) may include a step of the control server issuing the control request to the other server when the control server receives the control request for the specific terminal, a step of the other control server allocating the remote control right to the control server, and a step of the control server allocating the remote control right to the remote control terminal based on the remote control right from the other control server.

Also, when each of the plurality of control object terminals has a plurality of subunits, the step (c) may include a step of the control server identifying each of the plurality of subunits of each of the plurality of control object terminals uniquely and managing the remote control right for every subunit of each the terminal.

Also, the first network may be a 1394 network and the second network may be an IP network.

Also, when another remote control terminal is connected with the second network, the step (c) may include a step of the control server setting a point-to-point connection between the specific terminal and the control server when the control server allocates the remote control right to the remote control terminal, and a step of the control server prohibiting the allocation of the remote control right to another remote control terminal until the point-to-point connection is released.

### Brief Description of Drawings

Fig. 1 is a block diagram showing the network configuration of a conventional remote control system;
Fig. 2 is a block diagram showing the configuration of network in which a plurality of control terminals exist in a conventional 1394 network;
Figs. 3A to 3C are diagrams showing management examples of control rights by control right queues in the network configuration shown in Fig. 2;
Figs. 4A to 4C are diagrams showing management examples of the control rights by the control right queues in the network configuration shown in Fig. 2;
Figs. 5A to 5C are diagrams showing management examples of the control rights by the control right queues in the network configuration shown in Fig. 2;
Fig. 6 is a block diagram showing the configuration of a remote control system according to a first embodiment of the present invention;
Fig. 7 is a block diagram showing the configuration of a control server according to the first embodiment of the present invention;
Fig. 8 is a diagram showing a control right queue registration section which is provided for a 1394 network data management section of the control server according to the first embodiment of the present invention;
Fig. 9 is a diagram showing a remote control right queue registration section provided for a remote control right management section of the control server according to the first embodiment of the present invention;
Fig. 10 is a block diagram showing the configuration of a remote control terminal according to the first embodiment of the present invention;
Fig. 11 is a diagram showing a terminal data management table in the first embodiment of the present invention;
Fig. 12 is a diagram showing a connection data management table in the first embodiment of the present invention;
Fig. 13 is diagram showing a remote control terminal data management table in the first embodiment of the present invention;
Fig. 14 is a diagram showing a remote control right management table in the first embodiment of the present invention;
Fig. 15 is a diagram showing a connection management table in the first embodiment of the present invention;
Figs. 16A and 16B are flow charts showing an operation process of the control server according to the first embodiment of the present invention;
Fig. 17 is a diagram showing a management example of the remote control right by a remote control right queue in the remote control system according to the first embodiment of the present invention;
Fig. 18 is a diagram showing a management example of the remote control right by the remote control right queue in the remote control system according to the first embodiment of the present invention;
Fig. 19 is a diagram showing a management example of the remote control right by the remote control right queue in the remote control system according to the first embodiment of the present invention;
Fig. 20 is a block diagram showing the configuration of the remote control system according to a second embodiment of the present invention;
Fig. 21 is a diagram showing the remote control terminal data management table in the second embodiment of the present invention;
Fig. 22 is a diagram showing the remote control right management table in a third embodiment of the present invention;
Fig. 23 is a diagram showing the connection management table in the third embodiment of the present invention;
Fig. 24 is a diagram showing the remote control right management table in a fourth embodiment of the present invention;
Fig. 25 is a diagram showing the connection management table in the fourth embodiment of the present invention;
Fig. 26 is a block diagram showing the configuration of the remote control system according to a fifth embodiment of the present invention;
Fig. 27 is a diagram showing the remote control terminal data management table in the fifth embodiment of the present invention;
Fig. 28 is diagram showing the connection data management table in the fifth embodiment of the present invention;
Fig. 29 is a block diagram showing the configuration of the remote control system according to a sixth embodiment of the present invention;
Fig. 30 is a diagram showing a terminal data management table in the sixth embodiment of the present invention;
Fig. 31 is a diagram showing the connection data management table in the sixth embodiment of the present invention; and
Fig. 32 is a diagram showing the remote control right management table in the sixth embodiment of the present invention.

### Best Mode for Carrying Out the Invention

Hereinafter, a remote control system of the present invention will be described in detail with reference to the attached drawings.

Fig. 6 is a block diagram showing an example of a network configuration of the remote control system according to the first embodiment of the present invention. Referring to Fig. 6, in the network configuration, there are two kinds of networks of a 1394 network 300 and an IP network 400 as a network other than the 1394 network such as an Ethernet.

Also, the remote control system of the first embodiment is composed of a plurality of control object terminals 20-1 to 20-3 connected with the 1394 network 300, a control server 100 connected with both of the 1394 network 300 and the IP network 400 and a plurality of remote control terminals 10-1 to 10-3 connected with the IP network 400.

In Fig. 6, each of the 1394 network 300 and the control server 100 exists for only one but actually, a plurality of 1394 networks and a plurality of control servers may exist. Also, in Fig. 6, three control object terminals 20-1 to 20-3 and three remote control terminals 10-1 to 10-3 are shown, but the number of terminals is not limited to three, and many terminals may be present.

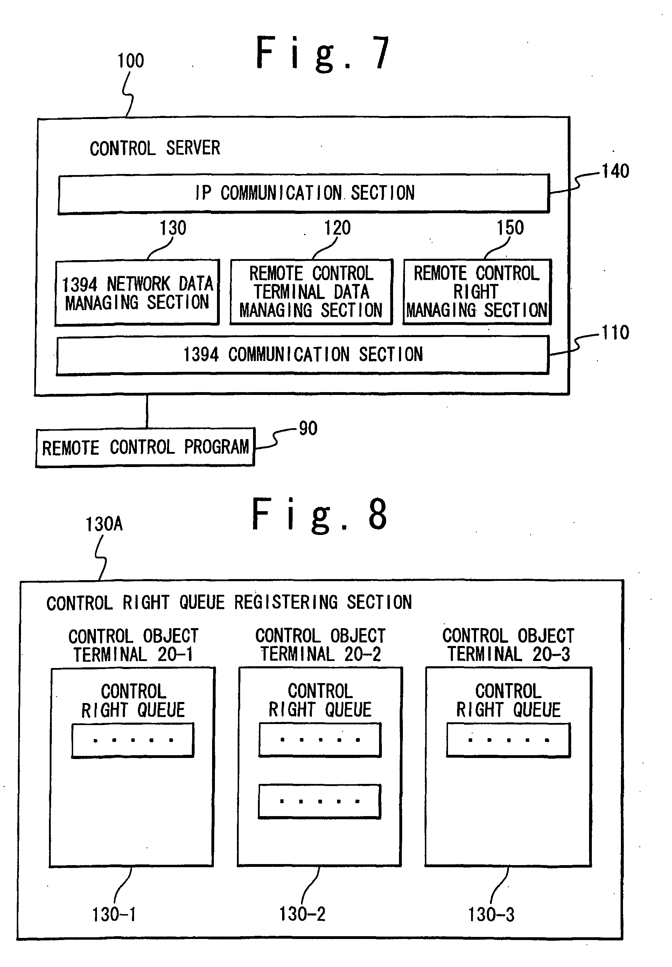

Fig. 7 is a block diagram showing the configuration of the control server 100 in the first embodiment. Referring to Fig. 7, the control server 100 in the first embodiment is composed of a 1394 communication section 110, an IP communication section 140, a 1394 network data management section 130, a remote control terminal data management section 120 and a remote control right management section 150. The 1394 communication section 110 is realized by a CPU for program control and communicates with each of the control object terminals 20-1 to 20-3 on the 1394 network 300. The IP communication section 140 communicates with each of the remote control terminals 10-1 to 10-3 on the IP network 400. The 1394 network data management section 130 manages the information of the 1394 network 300. The remote control terminal data management section 120 manages the data of each of the remote control terminals 10-1 to 10-3. The remote control right management section 150 processes remote controls from the remote control terminals 10-1 to 10-3.

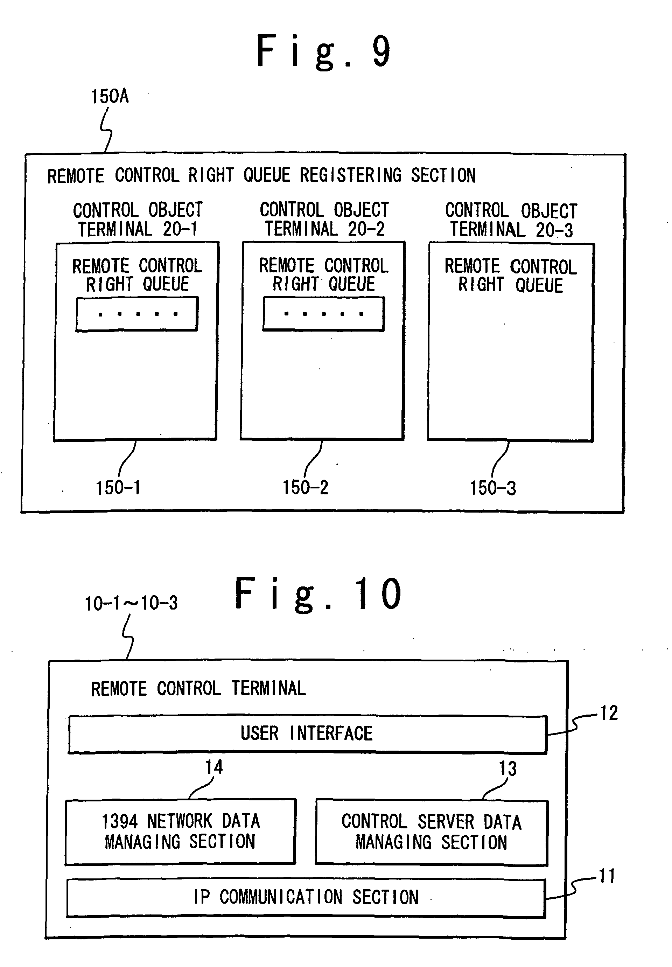

The 1394 network data management section 130 has a control right queue registration section 130A shown in Fig. 8 and a remote control right queue registration section 150A shown in Fig. 9. The control right queue registration section 130A manages the data to determine the control terminals connected directly with the 1394 network 300, containing the control server 100 which has the control right for exclusive control of the control object terminals 20-1 to 20-3 connected with the 1394 network 300. The remote control right queue registration section 150A manages the data to determine the remote control terminals connected with the IP networks 400 other than the 1394 network and having the remote control right for the exclusive remote control of the control object terminals 20-1 to 20-3.

As described with reference to Figs. 3A to 5C in the conventional example, the control right queue registration section 130A has control right queues 130-1 to 130-3 for the respective control object terminals. When the control terminal on the 1394 network 300 which contains the control server 100 sets a point-to-point connection with the control object terminal, an ID of the control terminal is written in the control right queue corresponding to the control object terminal to which the point-to-point connection is set. When the control terminal on the 1394 network 300 which contains the control server 100 releases the point-to-point connection with the control object terminal, the ID of the control terminal is deleted from the control right queue corresponding to the control object terminal from which the point-to-point connection is released. The control terminal having the ID registered on the head of the control right queue at that point is allocated with the control right of the corresponding control object terminal.

The remote control right queue registration section 150A contains remote control right queues 150-1 to 150-3 for the respective control object terminals. The remote control system according to the first embodiment has one feature in that the remote control right queue registration section 150A is provided. The remote control right management section 150 of the control server 100 determines whether or not it is possible to carry out the exclusive remote control to any of the control object terminals 20-1 to 20-3 from each of the remote control terminals 10-1 to 10-3 based on the remote control right queue registration section 150A, as later mentioned.

Fig. 10 is a block diagram showing the configuration of each of the remote control terminals 10-1 to 10-3 according to the first embodiment shown in Fig. 6.

Referring to Fig. 10, each of the remote control terminals 10-1 to 10-3 of the first embodiment is composed of an IP communication section 11, a user interface 12, a control server data management section 13 and a 1394 network data management section 14. The IP communication section 11 communicates with the control server 100 on the IP network 400. The user interface 12 provides data to the user of the remote control terminal 10 and receives a control from him. The control server data management section 13 manages data such as the IP address of the control server 100, a reception port number and so on. The 1394 network data management section 14 manages the data of the 1394 network 300 acquired through the communication with the control server 100.

A personal computer and other information terminal can be used for the remote control terminal 10. Also, the control object terminals 20-1 to 20-3 as the objects of the remote control can be electronic terminals of all kinds such as a video tape recorder and a monitor.

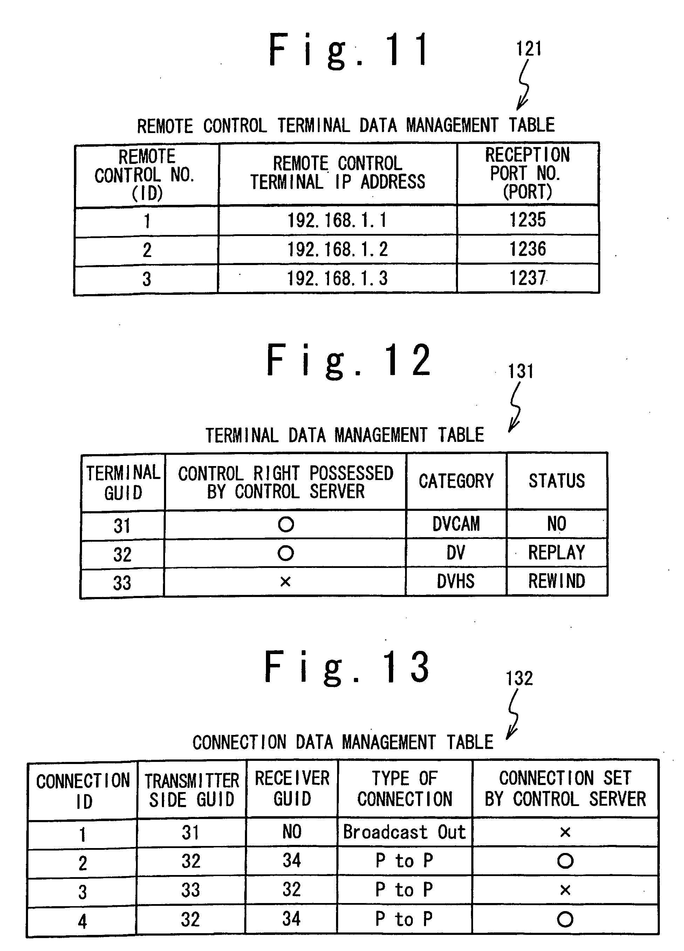

Fig. 11 shows a remote control terminal data management table 121 that manages the remote control terminal data stored in the remote control terminal data management section 120. The remote control terminal data management table 121 is used to manage a remote control number which the control server 100 allocates uniquely to each of the remote control terminals 10-1 to 10-3, a remote control terminal IP address (network address), a reception port number and so on.

Fig. 12 shows a terminal data management table 131 managed by the 1394 network data management section 130. An example of the terminal data management table 131 that manages the data of the control object terminals connected with the 1394 network 300 is shown in Fig. 12. The terminal data management table 131 is used to manage a 1394 network GUID (Global Unique ID) of each control object terminal, a category of the terminal, the possession or non-possession of the control right by the control server 100 and so on. It should be noted that GUID is an identification number (ID) peculiar to the terminal, is expressed in 64 bits and is allocated to each of 1394 terminals.

Fig. 13 is an example of a connection data management table 132 in the 1394 network 300. The connection data management table 132 is used to manage the connection ID allocated uniquely to each of connections by the control server 100, a GUID of the transmitter side terminal, a GUID of the receiver side terminal, the connection type, whether the connection is set by the control server 100, and so on.

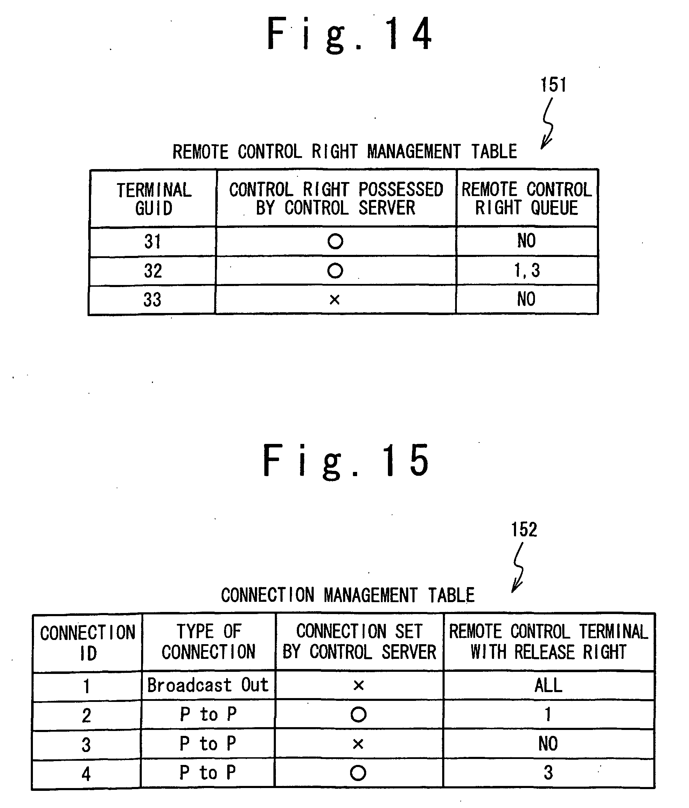

Fig. 14 is an example of a remote control right management table 151 held in the remote control right management section 150 and managing the remote control right of the control object terminal. The remote control right management table 151 is used to manage the GUID of each of the control object terminal 20-1 to 20-3 connected with the 1394 network 300, the possession or non-possession of the remote control right of the control object terminal by the control server 100, and a correspondence relation with the remote control number (ID) of one of the remote control terminals 10-1 to 10-3, which has requested the remote control right of the control object terminal. Here, the identification numbers (ID) of the remote control terminals 10-1 to 10-3 are written in the remote control right queue in order of the reception of the requests.

Fig. 15 is an example of a connection management table 152 which manages data about the release right of the connection. The connection management table 152 is used to manage correspondence relation of the ID allocated for every connection, the kind of the connection, whether the terminal that has set the connection is the control server 100 itself, and the remote control number (ID) of one of the remote control terminals 10-1 to 10-3 having the release right. Here, the connection ID is a number allocated uniquely by the control server 100. Also, as the ID of any of the remote control terminals 10-1 to 10-3 which has a release right, the remote control number (ID) of one of the remote control terminals 10-1 to 10-3 which has requested the setting of the connection is basically stored.

Next, the operation of the remote control system in this embodiment will be described. First, after the control server 100, the control object terminals 20-1 to 20-3, the remote control terminals 10-1 to 10-3 will be generally described, and then a specific example will be described.

The remote control terminals 10-1 to 10-3 request the start of the communication with the control server 100 in case of initiation of access to the control server 100. At this time, considering a case where a plurality of remote control terminals 10 exists, the control server 100 allocates a unique remote control number (ID) to each of the remote control terminals 10-1 to 10-3 every IP address and adds the data to the remote control terminal data management table 121 of Fig. 11.

Oppositely, the remote control terminals 10-1 to 10-3 issues communication end requests to the control server 100 when the access to the control server 100 are ended. At this time, the control server 100 deletes the data about the corresponding one of the remote control terminals 10-1 to 10-3 from the remote control terminal data management table 121 of Fig. 11. Any of the remote control terminals 10-1 to 10-3 can request acquisition of the 1394 network data, the setting of the connection and the control of the terminal to the control server 100 after start of the access to the control server 100. The control server 100 makes the remote control of the 1394 network 300 possible by executing these requests in place of the remote control terminal and transmitting a result to the remote control terminal 10. At this time, the control server 100 can specify one of the remote control terminals 10-1 to 10-3 which receives the control request every control object terminal.

Hereinafter, in this description, when the exclusive control request from each of the remote control terminals 10-1 to 10-3 to the specific control object terminal can be received, it is supposed that the remote control terminal has the remote control right of the corresponding terminal. In the same way, the control server 100 can specify any of the remote control terminals 10-1 to 10-3 to accept a connection release request every point-to-point connection. Hereinafter, in this description, when the release request of the point-to-point connection from any of the remote control terminals 10-1 to 10-3 can be received, it is supposed that the remote control terminal has the release right of the corresponding point-to-point connection.

The remote control right is managed on the control server 100 using the queue, like the management of the control right. The registration and deletion of the remote control number (ID) on and from the remote control right queue, and the release right of the point-to-point connection will be described below.

The control server 100 writes the remote control number (ID) of any of the remote control terminals 10-1 to 10-3 into the end of the remote control right queues on the transmitter side and the receptor side, when the setting of the point-to-point connection is requested from any of the remote control terminals 10-1 to 10-3.

Also, when the release of the point-to-point connection is requested from any of the remote control terminals 10-1 to 10-3, the remote control number (ID) of one of the remote control terminals 10-1 to 10-3 for which the point-to-point connection is set is deleted from the remote control right queues. In the same way, when each of the remote control terminal 10-1 to 10-3 for which the point-to-point connection is set ends communication without releasing the point-to-point connection, the remote control number (ID) of each of the remote control terminals 10-1 to 10-3 is deleted from the remote control right queues corresponding to the control object terminal 20-1 to 20-3 on the transmitter side and the receiver side.

Because the connection release right is allocated to one of the remote control terminals 10-1 to 10-3 which has set the point-to-point connection, the connection release from another of the remote control terminals 10-1 to 10-3 can be prevented. However, when one of the remote control terminals 10-1 to 10-3 which has set the point-to-point connection ends the communication, the point-to-point connection can be released from any of the remote control terminals 10-1 to 10-3.

Next, the condition that the control server 100 allocates the remote control right to the remote control terminals 10-1 to 10-3 will be described.

The control server 100 allocates the remote control right of the control object terminal 20-1 to 20-3 whose control right the control server 100 has, to the remote control terminal whose remote control number (ID) is written at the head of the remote control right queue. Also, when the control server 100 has the control right and the remote control number of the remote control terminal is not written in the remote control right queue, the control server 100 allocates the remote control right to all the remote control terminals 10-1 to 10-3. Also, the remote control right is not allocated to the remote control terminals 10-1 to 10-3 when the control server 100 itself does not have the control right of the control object terminal 20-1 to 20-3.

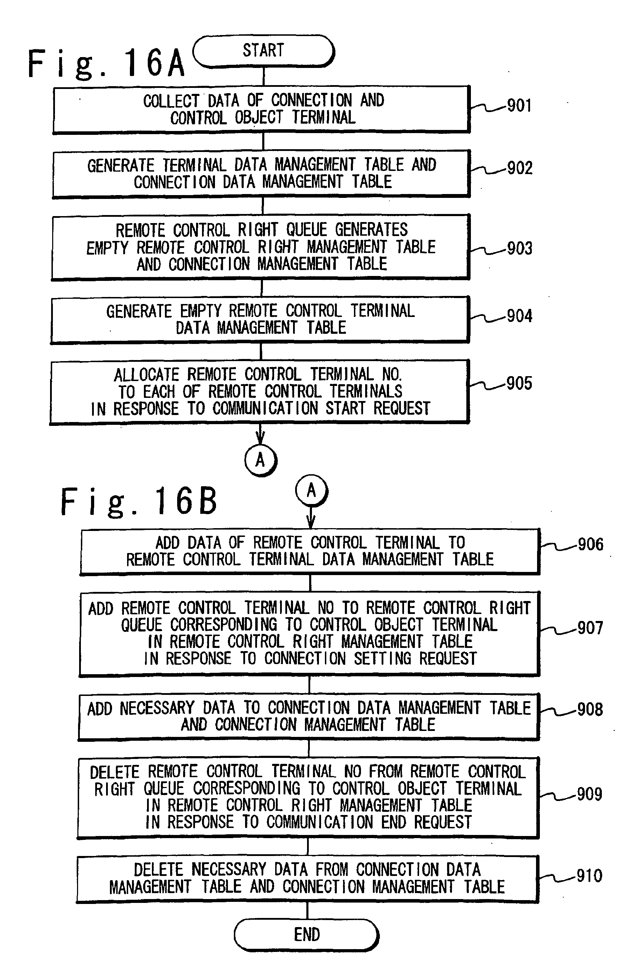

Next, the procedure which each of the remote control terminals 10-1 to 10-3 of Fig. 6 controls each of the control object terminal 20-1 to 20-3 will be described in accordance with to the flow chart of Figs. 16A and 16B showing the process of the control server 100 using an example in which the remote control terminal 10-1 and the remote control terminal 10-3 control the control object terminal 20-2.

First, the control server 100 collects the data of the control object terminal 20-1 to 20-3 connected with the 1394 network 300 and the connection data at the initiation (step 901) and generates the terminal data management table 131 and a connection data management table 132 shown in Figs. 12 and 13 (Step 902). Also, the control server 100 generates a remote control right management table 151 and a connection management table 152 of Figs. 14 and 15 in which the remote control right queues are empty (Step 903). Also, the control server 100 generates the remote control terminal data management table 121 shown in Fig. 11 in an empty state (Step 904).

Next, the remote control terminal 10-1 issues a communication start request to the control server 100 and specifies a reception port number "1234" on the remote control terminal 10-1.

When receiving this communication start request, the control server 100 allocates a unique number ("1" in this example) to the remote control terminal 10-1 as the remote control number (ID) (Step 905). The control server 100 registers this terminal number on the remote control terminal data management table 121 of Fig. 11 (Step 906). The communication start requests from the other remote control terminals 10-2 and 10-3 are processed in the same way and unique numbers are registered on the remote control terminal data management table 121 of Fig. 11.

Next, the remote control terminal 10-1 acquires the 1394 network data from the control server 100 and issues a setting request of a point-to-point connection between the control object terminal 20-2 and the control server 100 to the control server 100.

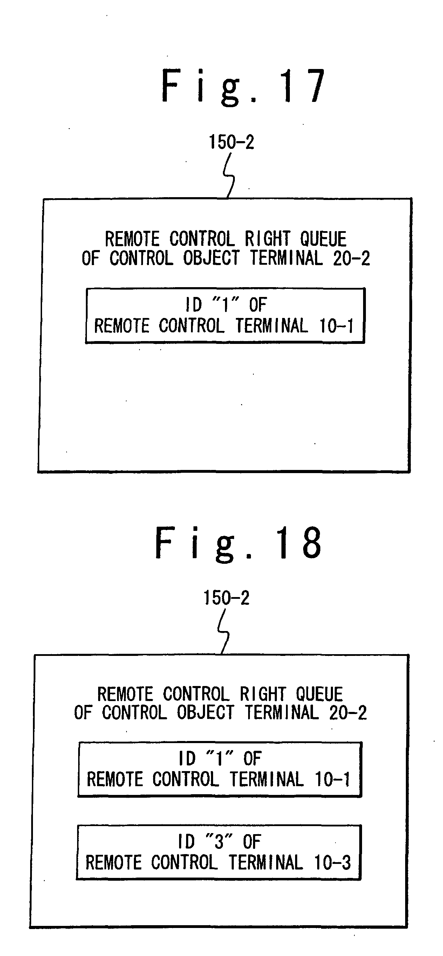

The control server 100 receives the setting request and registers the remote control number ("1" in this example) allocated to the remote control terminal 10-1 on the remote control right queue corresponding to the control object terminal 20-2 in the remote control right management table 151 shown in Fig. 14 (Step 907). The state of the remote control right queue 150-2 on the control object terminal 20-2 in this case is shown in Fig. 17.

At the same time, the control server 100 adds the data to the connection management table 152 shown in Fig. 13 and the connection data management table 132 shown in Fig. 15 (Step 908).

Subsequently, a case where the remote control terminal 10-3 requests the setting of the point-to-point connection between the control object terminal 20-2 and the control server 100 to the control server 100 will be described. The control server 100 receives the request and registers the remote control number ("3" in this case) allocated to the remote control terminal 10-3 on the remote control right queue corresponding to the control object terminal 20-2 in the remote control right management table 151 shown in Fig. 14. Fig. 13 shows the state of the remote control right queue 150-2 about the control object terminal 20-2 in this case.

The control server 100 adds the data to the connection management table 152 shown in Fig. 15 and the connection data management table 132 shown in Fig. 13.

Because the remote control number of the remote control terminal 10-1 is registered on the head of the remote control right queue corresponding to the control object terminal 20-2 in the remote control right management table 151 shown in Fig. 14, the remote control right is acquired by the remote control terminal 10-1. Therefore, the remote control terminal 10-1 can remote control the control object terminal 20-2 by transmitting a request for remote control of the control object terminal 20-2 to the control server 100.

On the other hand, even if the remote control terminal 10-3 transmits the request for remote control of the control object terminal 20-2 to the control server 100, the request is refused by the control server 100 because the remote control number of the remote control terminal 10-3 is not registered on the head of the remote control right queue corresponding to the control object terminal 20-2.

Because the data about the remote control right can be acquired previously from the control server 100, when the remote control terminal 10-1 does not have the remote control right, the remote control by the remote control terminal 10-1 can be realized by previously controlling the remote control terminals 10-2 and 10-3 not to transmit the request of the remote control.

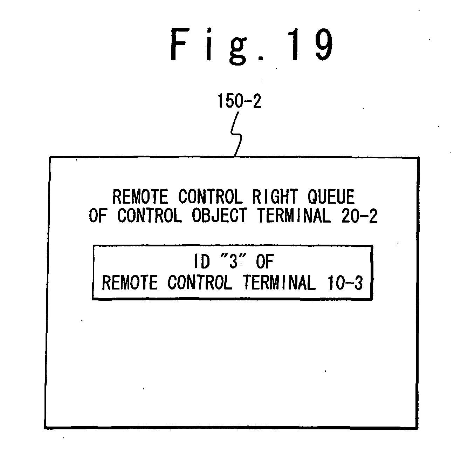

When the remote control terminal 10-1 requests the end of the communication process to the control server 100 in this state, the control server 100 deletes the remote control number "1" from'the remote control right queue (Step 909). Moreover, the control server 100 deletes the data of the remote control terminal 10-1 from the connection management table 152 shown in Fig. 15 and the connection data management table 132 shown in Fig. 13. Thus, the remote control number at the head of the remote control right queue changes to "3" to show the remote control terminal 10-3. Fig. 19 shows the state of the remote control right queue 150-2 about the control object terminal 20-2 in this case. At this time, the remote control right is allocated to the remote control terminal 10-3.

Moreover, when the remote control terminal 10-3 requests the end of the communication process to the control server 100, the control server 100 deletes the remote control number "3" from the remote control right queue and the remote control right queue becomes empty. At this time, the control of the control object terminal 20-2 is possible to be carried out from all the remote control terminals 10-1 to 10-3 on the communication with the control server 100.

As described above, according to the first embodiment, the control server 100 identifies each of the remote control terminals 10-1 to 10-3 connected through the IP networks 400 and can realize the exclusive remote control to the control object terminal 20-1 to 20-3 connected by the 1394 network 300 by each of the remote control terminals 10-1 to 10-3. Thus, the above first problem can be solved.

Next, the remote control system according to the second embodiment of the present invention will be described. Fig. 20 is a block diagram showing the configuration of the remote control system according to the second embodiment of the present invention.

In the second embodiment, the remote control number (ID) is not allocated for each of the remote control terminals 10-1 to 10-3, unlike the first embodiment. The remote control number (ID) is allocated to each of application programs 10-1-1 and 10-1-2 on the remote control terminal 10-1, and the remote control terminals 10-2 and 10-3 to solve the above second problem.

The remote control number (ID) is allocated to every IP address in the first embodiment. However, in the second embodiment, the request is identified based on a set of the IP address and a reception port number to allocate the remote control number (ID).

The "control application program 10-1-1" to remote control the control object terminal 20-1 to 20-3 from the remote control terminal 10-1, and the "control application program 10-1-2" to remote control the control object terminals 20-1 to 20-3 in place of another remote control terminal 10-4 exists in the remote control terminal 10-1.

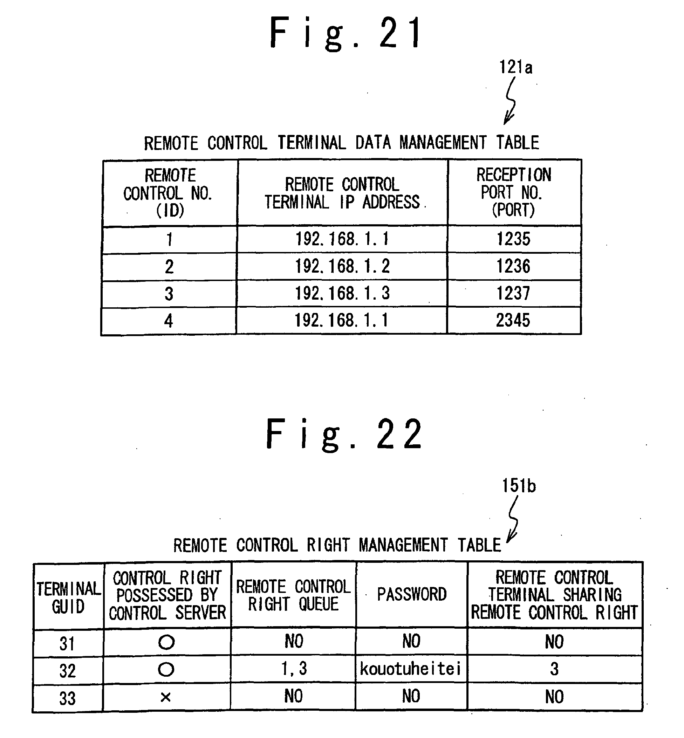

When all the application programs 10-1-1, 10-1-2, and the remote control terminals 10-2 and 10-3 request the start of the communication to the control server 100a, the remote control terminal data management table 121a become shown in Fig. 21. In this way, the different remote control numbers (ID) can be allocated to the remote control terminal data management table 121a (Fig. 21) in a case that the other remote control terminal 10-4 accesses via the control application program 10-1-2 in the remote control terminal 10-1 and in a case that the remote control terminal 10-1 itself accesses using the remote control application program 10-1-1. Thus, the control server 100a can identify the request every application program and can allocate the remote control right to these two exclusively.

As described above, according to the second embodiment, in addition to the effect of the first embodiment, the exclusive remote control to the control object terminals 20-1 to 20-3 can be realized for every application program on the remote control terminal. Thus, the above second problem can be solved.

Next, the remote control system according to the third embodiment of the present invention will be described. The network configuration in the third embodiment is same as that of the first embodiment shown in Fig. 6. First, the operation of the third embodiment will be generally described, and a specific example will be described.

While the remote control right is fully exclusively allocated in the first and second embodiments, the remote control right is shared among the remote control terminals 10-1 to 10-3 in the third embodiment. In other words, an exclusive control not for each of the remote control terminals 10-1 to 10-3 but for every user is realized by verifying the user using a password. The above third problem that the same user can not carry out the exclusive control when the remote control terminal was different can be solved through this control.

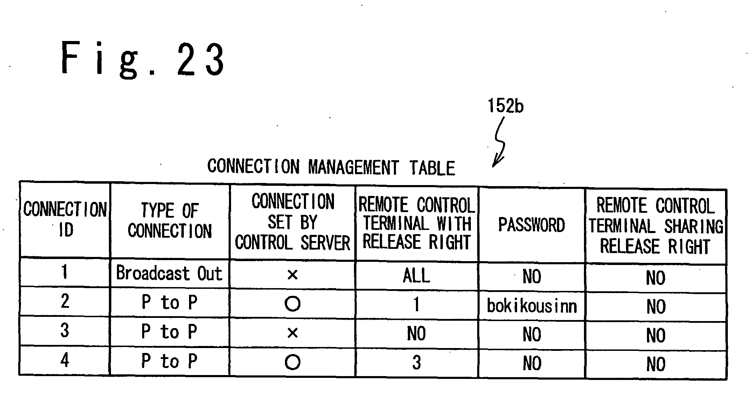

Figs. 22 and 23 show examples of the remote control right management table 151b and the connection management table 152b in the third embodiment. In the third embodiment, a password and the remote control number (ID) of each of the remote control terminals 10-1 to 10-3 which shares the remote control right, are respectively added to the remote control right management table 151 and the connection management table 152 shown in Figs. 14 and 15 in the first embodiment, as shown in Figs. 22 and 23.

In the third embodiment, the remote control terminal which has the remote control right of the control object terminal can set a password for the sharing of the remote control right for every control object terminal. This password may be specified by the user through a user interface and may be automatically generated by the remote control terminal.

When sharing the remote control right is wanted, the remote control terminal can request the sharing of the remote control right by showing the password to the control server 100. The sharing of the remote control right is permitted when this password is coincident with a preset password and the permitted one of the remote control terminals 10-1 to 10-3 can control the control object terminals 20-1 to 20-3 like the remote control terminal which has the remote control right. Also, a connection release right can be shared by using the password like the remote control right.

Next, the operation of the third embodiment will be described. First, when all the remote control terminals 10-1 to 10-3 issue communication start requests to the control server 100, the remote control terminal data management table 121 is set as shown in Fig. 11. Here, it is supposed that the remote control terminals 10-1 and 10-3 set point-to-point connections between the control object terminal 20-2 and the control server 100 in order. In this case, the terminal data management table 131 and the connection data management table 132 become as shown in Figs. 12 and 13.

At this time, it is supposed that the remote control terminal 10-1 sets a password "kouotuheitei" for the sharing of the remote control right of the control object terminal 20-2. Also, it is supposed that the remote control terminal 10-3 succeeds in the request of the sharing of the remote control right of the control object terminal 20-2. In this case, the remote control right management table 151b become shown in Fig. 22. At this time, the remote control terminal 10-3 can control the control object terminal 20-2 like the remote control terminal 10-1 which has the remote control right.

In the same way, it is supposed that the remote control terminal 10-1 sets a password "bokikousinn" for the sharing of the connection release right. In this case, the connection management table 152b become shown in Fig. 23.

As described above according to the third embodiment, the specifying of the same user becomes possible by setting the password, in addition to the effect of the first embodiment, and the exclusive remote control to the control object terminals 20-1 to 20-3 can be realized for every user as well as for every remote control terminal. Thus, the above third problem can be solved.

Next, the remote control system according to the fourth embodiment of the present invention will be described. The network configuration of the fourth embodiment is a same as that of the first embodiment shown in Fig. 6. In the fourth embodiment, the remote control right and the connection release right of each of the control object terminals 20-1 to 20-3 are extended in such a manner that they are held for a predetermined time until each of the remote control terminals 10-1 to 10-3 ends the communication with the control server 100. This solves the above fourth problem.

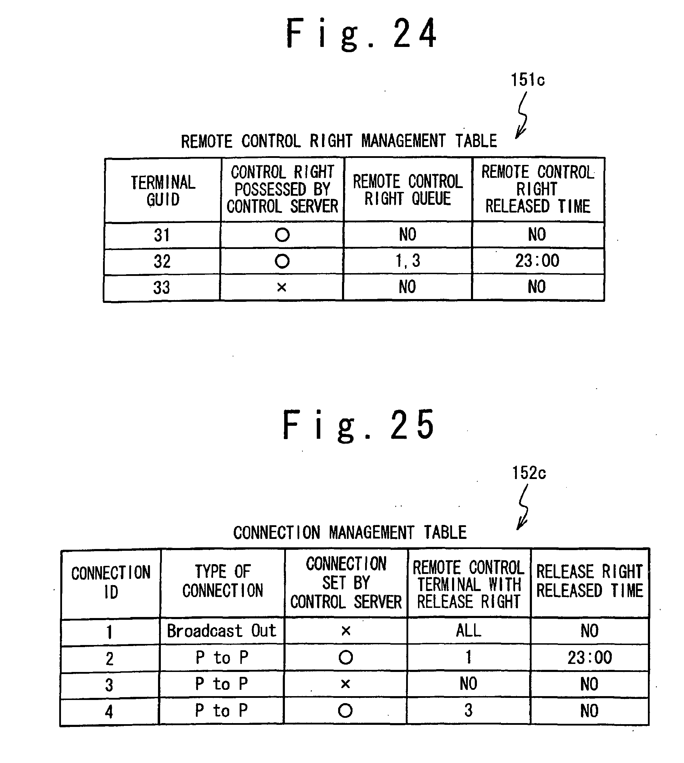

Figs. 24 and 25 show examples of the remote control right management table 151c of the fourth embodiment and the connection management table 152c respectively. In the remote control right management table 151c and the connection management table 152c shown in Figs. 24 and 25 in the fourth embodiment, a release time is added to the remote control right management tables 151 and the connection management tables 152 in the first embodiment, as shown in Figs. 14 and 15.

First, it is supposed that all the remote control terminals 10-1 to 10-3 issue communication start requests to the control server 100. At this time, the remote control terminal data management table 121 becomes shown in Fig. 11. Here, it is supposed that the remote control terminals 10-1 and 10-3 set point-to-point connections between the control object terminal 20-2 and the control server 100 in order. In this case, the terminal data management table 131 and the connection data management table 132 become shown in Figs. 12 and 13.

In the fourth embodiment, when the remote control terminal 10-1 reserves a recording operation of the control object terminal 20-2, it is possible to request to secure the remote control right previously until a recording end time. For example, when the securing of the remote control right and the connection release right are requested until time 23:00, the remote control right management table 151c and the connection management table 152c become shown in Figs. 24 and 25. In this case, even if the remote control terminal 10-1 ends the communication with the control server 100, the other remote control terminals 10-2 and 10-3 can not control the control object terminal 20-2 until 23:00. Also, because all of the remote control terminals 10-1 to 10-3 do not have the remote control right and the connection release right after 23:00, the remote control and the connection release become possible from all the remote control terminals 10-2 and 10-3 which are communicating with the control server 100 at the point.

Moreover, if the password for the remote control right and connection release right shown in the third embodiment is used together, the release of the reservation of the recording operation can be carried out for every user.

As described above, according to the fourth embodiment, the time zone during which the exclusive remote control is carried out can be reserved, e.g. the exclusive control to the time of the video recording end can be sustained, in addition to the effect of the first embodiment. Thus, the above fourth problem can be solved.

Next, the remote control system according to the fifth embodiment of the present invention will be described. Fig. 26 is a block diagram showing the configuration of the remote control system according to the fifth embodiment of the present invention. After the operation of the remote control system of the fifth embodiment is generally described, a specific example will be described.

In the remote control system of the fifth embodiment, a plurality of control servers exist on the 1394 network 300. The functions of the control server are extended in such a manner that a proxy operation of the control server is possible, by operating each of the control servers as a remote control terminal of another control server. Thus, the above fifth problem is solved.

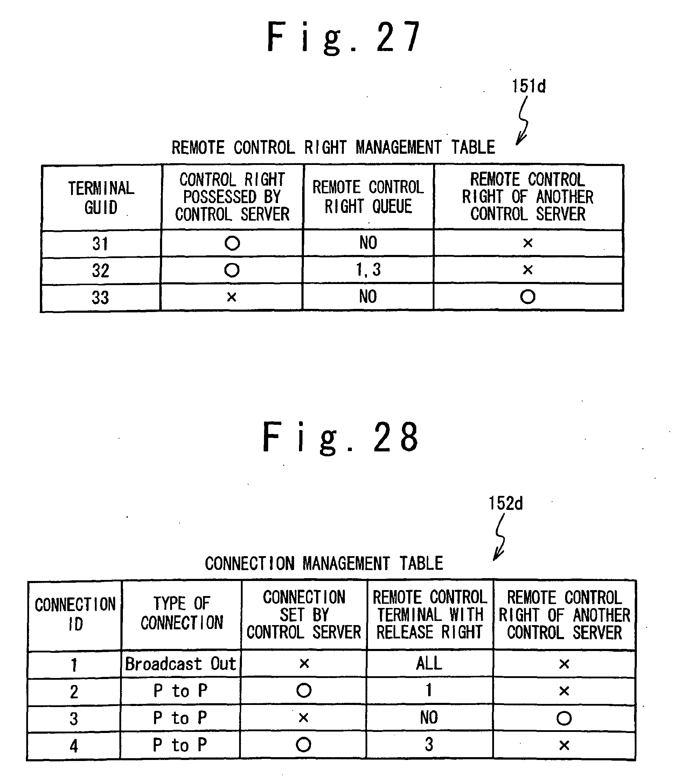

Figs. 27 and 28 show examples of the remote control right management table 151d and the connection management table 152d in the fifth embodiment, respectively. In the remote control right management table 151d and the connection management table 152d in the fifth embodiment, data indicating whether the remote control right and the connection release right are allocated to the control server 100-1 from another control server 100-2 on the 1394 network 300 is added to each of the remote control right management tables 151 and the connection management tables 152 shown in Figs. 14 and 15 in the first embodiment, as shown in Figs. 27 and 28.

The control server operates as one remote control terminal to another control server, when other control servers exist on the same 1394 network 300. When the control server requests the acquisition of the remote control right of the control object terminals 20-1 to 20-3 whose control rights the other control servers have and the remote control right can be acquired, the control server updates the data of the remote control right management table 151d of Fig. 27. In the same way, as for the release right of the point-to-point connection, the control server requests the release right of the point-to-point connection which the other control server set and updates the data of the connection management table 152d of Fig. 28.

When the acquisition request of the remote control right of any of the control object terminals 20-1 to 20-3 to which the control server has the remote control right is issued from the remote control terminal, the control server can transfer the remote control right to the issuing remote control terminal. This is the same about the release right of the point-to-point connection.

Referring to the configuration of Fig. 26, the operation of the fifth embodiment will be described. First, when all the remote control terminals 10-1 to 10-3 issue the communication start requests to the control server 100-1, the remote control terminal data management table 121 of the control server 100-1 becomes shown in Fig. 11. Here, when the remote control terminal 10-1 and the remote control terminal 10-3 set point-to-point connections between the control object terminal 20-2 and the control server 100 in order, the terminal data management table 131 and the connection data management table 132 become shown in Figs. 12 and 13, for example. At this time, the control server 100-1 does not have the control right of the control object terminal 20-3.

When the remote control terminal 10-1 requests the remote control right of the control object terminal 20-3, the control server 100-1 requests the remote control right to the control server 100-2. Thus, the remote control right is allocated to the remote control terminal 10-1 after this request succeeds. At this time, for example, the remote control right management table 151d and the connection management table 152d in the control server 100-1 become like Figs. 27 and 28. Thereafter, exclusive control is realized by the control server 100-1 issuing the control request of the control object terminal 20-3 from the remote control terminal 10-1, in place of the control server 100-2.

As described above, according to the fifth embodiment, the effect is achieved that when the plurality of control servers exist on the 1394 network 300, the remote exclusive control to all the control object terminals 20-1 to 20-3 can be realized through communication of the remote control terminal with one of the control servers, in addition to the effect in the first embodiment. Also, the exclusive control can be achieved in conjunction with the plurality of control servers by each of the plurality of control servers operating another control server to acquire the remote control right. Thus, the above fifth problem can be solved.

Next, the remote control system according to the sixth embodiment of the present invention will be described. Fig. 29 is a block diagram showing the configuration of the remote control system according to the sixth embodiment of the present invention. In the remote control system in the sixth embodiment, the remote control right is allocated to the control object terminals 20-2 and 20-3 and each of subunits 20-1-1 and 20-1-2, which are provided in the control object terminal 20-1 to have different functions and to operate independently. Thus, the conventional sixth problem can be solved.

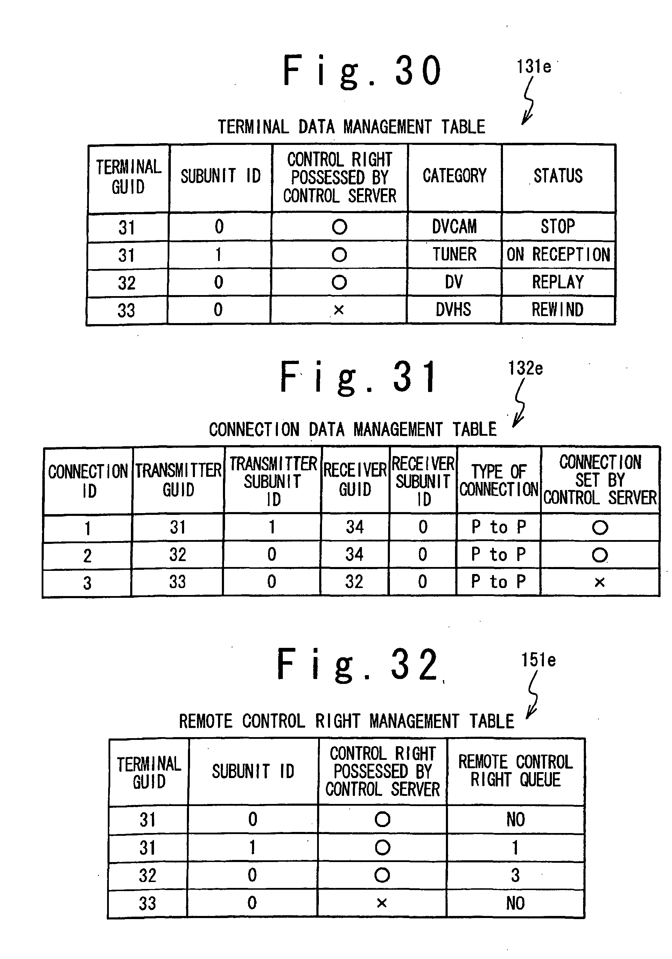

Figs. 30, 31, and 32 show examples of the terminal data management table 131e, a connection data management table 132e and a remote control right management table 151e in a sixth embodiment, respectively. In the terminal data management table 131e, the connection data management table 132e and the remote control right management table 151e in the sixth embodiment, data of a subunit number of the subunits 20-1-1 and 20-1-2 is added to the terminal data management tables 131, the connection data management tables 132 and the remote control right management tables 151 shown in Figs. 12, 13, and 14 in the first embodiment, as shown in Figs. 30, 31, and 32.

First, when all the remote control terminals 10-1 to 10-3 issue communication start requests to the control server 100-1, the remote control terminal data management table 121 of the control server 100-1 becomes shown in Fig. 11. Here, it is supposed that the remote control terminal 10-1 sets a connection between the subunit 20-1-2 of the control object terminal 20-1 and the control server 100. In this case, the terminal data management table 131e, the connection data management table 132e, the remote control right management table 151e become shown in Figs. 30, 31, and 32.

At this time, it is supposed that the remote control terminal 10-2 sets a connection between the subunit 20-1-1 of the control object terminal 20-1 and the control server 100. In this case, the remote control terminal 10-2 can acquire the remote control right of the subunit 20-1-1 of the control object terminal 20-1. Here, for convenience, a case where the functions of the subunits 20-1-1 and 20-1-2 are different each other will be described. However, in the same way, this embodiment can be applied to a case where a plurality of subunits provides a same function. For example, when physically single hard disk accepts two accesses at a same time, two subunits of the hard disk could be set.

As described above, according to this embodiment, the effect that the exclusive remote control can be realized for every function of the control object terminal is provided in addition to the effect of the first embodiment. Thus, the above sixth problem can be solved.

Also, the above embodiments of the present invention can be implemented by combining them freely each other.

It should be noted that in the remote control system according to each of the above embodiments, the functions of 1394 communication section 110, the remote control terminal data management section 120, the 1394 network data management section 130, the IP communication section 140, and the remote control right management section 150 in the control server and other functions can be realized in hardware. However, the functions may be realized by a remote control program 90 as a computer program loaded in a memory of a computer. The remote control program 90 is stored in a recording medium such as a magnetic disk, and a semiconductor memory. The above functions are realized by the remote control program 90 loaded from the recording medium into the computer and controlling the operation of the computer.

As above, the present invention is described using the preferred embodiments. However, the present invention is not always limited to the above embodiments and various modifications can be implemented in the range of the spirits of the present invention.

In the above-mentioned embodiments, the remote control in the 1394 network is described. However, in the same way, the present invention can be applied to the remote control in a network using USB connection as well as the 1394 network. Also, the IP network is not limited to a network connected with the 1394 network and in the same way, the present invention can be applied to a network other than the above network.

As described above, the following effects are achieved according to the remote control system of the present invention, and the control server used for it.

First, the plurality of remote control terminals on a network can carry out exclusive remote control to a control object terminal on another network appropriately, by identifying the remote control terminal on the network uniquely and allocating the remote control right.

Also, when a plurality of application programs exists in the remote control terminal, the exclusive control of the control object terminal can be carried out for every application program.

Also, a user who controls a plurality of application programs in a remote control terminal on a network can control a control object terminal through a plurality of application programs.

Also, a time when an exclusive remote control is carried out can be reserved in the remote control of the control object terminal from the remote control terminal.

Also, in the remote control of the control object terminal, when a plurality of control servers exist on a network, the remote control terminal can carry out a exclusive remote control to all control object terminals through communication with one of the control servers.

Also, in the remote control of the control object terminal, the exclusive remote control can be carried out for every subunit of the control object terminal.

## Claims

1. A remote control system comprising:
a plurality of control object terminals connected with a first network;
a control server connected with said first network and a second network to control said plurality of control object terminals; and
a remote control terminal connected with said second network,
wherein said remote control terminal issues a control request for a specific terminal as one of said plurality of control object terminals to said control server through said second network, and
said control server identifies said remote control terminal uniquely in response to said control request and allocates a remote control right to said remote control terminal to permit an exclusive remote control to said specific terminal.

2. The remote control system according to claim 1, wherein said control server comprises:
a remote control terminal data management section which manages identification data of said remote control terminal;
a network data management section which manages terminal data showing whether said control server has a control right of each of said plurality of control object terminals and network data about connection when said control server controls each of said plurality of terminals; and
a remote control right management section which has a remote control right management table which stores said remote control right about each of said plurality of control object terminals, and which manages said remote control right of said remote control terminal for each of said plurality of control object terminals based on said identification data, said terminal data of said remote control terminal and said network data using said remote control right management table.

3. The remote control system according to claim 2, wherein said remote control right management section registers said remote control rights allocated to said remote control terminal on said remote control right management table in order of reception of said control requests from said remote control terminal and permits an exclusive remote control in order of reception of the control requests.

4. The remote control system according to claim 2 or 3, wherein said remote control terminal executes each of a plurality of application programs and issues said control request to said control server, and
said control server identifies each of said plurality of application programs uniquely and allocates said remote control right for each of said plurality of application programs to permit the exclusive remote control to said specific terminal.

5. The remote control system according to any of claims 2 to 4, wherein said control server verifies a user of said remote control terminal and generates verification data, registers said verification data of said user on said remote control right management table together with said remote control right data, and permits said exclusive remote control for every said user based on said remote control right management table.

6. The remote control system according to any of claims 2 to 5, wherein said control server registers a release time showing an end time of said exclusive control for each of said plurality of control object terminals on said remote control right management table in addition to said remote control right data, holds said remote control right until said release time when said release time is registered, and releases said remote control right after said release time.

7. The remote control system according to any of claims 2 to 6, further comprising another control server connected with said first network,
wherein said other control server has said remote control right of said specific terminal,
when receiving said control request of said specific terminal, said control server issues a control server control request to said other control server,
said other control server allocates said remote control right to said control server, and
said control server allocates said remote control right to said remote control terminal based on said remote control right allocated from said other control server.

8. The remote control system according to any of claims 2 to 7, wherein each of said plurality of control object terminals has a plurality of subunits, and
said control server identifies each of said plurality of subunits of each of said plurality of control object terminals uniquely and manages said remote control right for every subunit.

9. The remote control system according to any of claims 2 to 8, wherein said first network is a 1394 network.

10. The remote control system according to any of claims 2 to 9, wherein said second network is an IP network.

11. The remote control system according to any of claims 2 to 10, further comprising:
another remote control terminal connected with said second network,
wherein when allocating said remote control right to said remote control terminal, said control server establishes a point-to-point connection between said specific terminal and said control server without allocating said remote control right to said other remote control terminal until said point-to-point connection is released.

12. The remote control system according to any of claims 2 to 10, further comprising:
another remote control terminal connected with said second network,
wherein said control server newly establishes a point-to-point connection with said specific terminal based on a setting request when said control server receives the setting request of the point-to-point connection from said remote control terminal, and allocates said remote control right of said specific terminal to said remote control terminal until said point-to-point connection is released, without allocating said remote control right to said other remote control terminal.

13. The remote control system according to any of claims 2 to 11-2, further comprising:
another remote control terminal connected with said second network,
wherein said control server makes said remote control terminal to release said remote control right of said control object terminal associated with said point-to-point connection when said control server receives a release request of said point-to-point connection from said remote control terminal or said remote control terminal ends communication with said control server, and
said control server allocates said remote control right of said other remote control terminal.

14. A control server connected with a first network and a second network, wherein a plurality of control object terminals are connected with said first network and a remote control terminal is connected with said second network, said control server comprising:
a remote control right management table which stores data of a remote control right of each of said plurality of control object terminals,
wherein when said remote control terminal issues a control request for a specific terminal as one of said plurality of control object terminals to said control server through said second network, said control server identifies said remote control terminal uniquely in response to said control request, allocates said remote control right of said specific terminal to said remote control terminal to permit an exclusive remote control, and registers said remote control right data on said remote control right management table.

15. The control server according to claim 14,
wherein said control server comprises:
a remote control terminal data management section which manages identification data of said remote control terminal;
a network data management section which manages terminal data showing whether said control server has a control right of each of said plurality of control object terminals and network data about connection when said control server controls each of said plurality of terminal; and
a remote control right management section which manages said remote control right of said remote control terminal for each of said plurality of control object terminals based on said identification data, said terminal data of said remote control terminal and said network data using a remote control right management table.

16. The control server according to claim 15,
wherein said remote control right management section registers said remote control rights allocated to said remote control terminal on said remote control right management table in order of reception of said control requests from said remote control terminal and permits an exclusive remote control in order of reception of said control requests.

17. The control server according to any of claims 14 to 16, wherein when said remote control terminal executes each of a plurality of application programs and issues said control request to said control server, said control server identifies each of said plurality of application programs uniquely and allocates said remote control right for each of said plurality of application programs to permit the exclusive remote control to said specific terminal.

18. The control server according to any of claims 14 to 16, wherein said control server verifies a user of said remote control terminal and generates verification data, registers said verification data of said user on said remote control right management table together with said remote control right data, and permits said exclusive remote control for every said user based on said remote control right management table.

19. The control server according to any of claims 14 to 18, wherein said control server registers a release time showing an end time of said exclusive control for each of said plurality of control object terminals on said remote control right management table in addition to said remote control right data, holds said remote control right until said release time when said release time is registered, and releases said remote control right after said release time.

20. The control server according to any of claims 14 to 18, wherein another control server connected with said first network has said remote control right of said specific terminal, and
when receiving said control request for said specific terminal, said control server issues a control server control request to said other control server, and
when said remote control right is allocated from said other control server to said control server, said control server allocates said remote control right to said remote control terminal based on said remote control right allocated from said other control server.

21. The control server according to any of claims 14 to 20, wherein when each of said plurality of control object terminals has a plurality of subunits, said control server identifies each of said plurality of subunits of each of said plurality of control object terminals uniquely and manages said remote control right for every subunit.

22. A remote control terminal which carries out a remote control to a specific one of a plurality of control object terminals connected with a first network through a second network and a control server,
wherein said control server is connected with said first network and said second network, said remote control terminal comprising:
a network management section which manages terminal data about said plurality of control object terminals connected with said first network;
a control server data management section which manages data about said control server;
an interface section which receives a control request from a user based on said terminal data; and
a communication section which transmits said control request to said control server through said second network based on said control server data and receives said remote control right from said control server

23. A remote control method comprising:
(a) providing a control server and a plurality of control object terminals connected with a first network;
(b) a remote control terminal issuing a control request for a specific terminal as one of said plurality of control object terminals to said control server through a second network;
(c) said control server identifying said remote control terminal uniquely in response to said control request, and allocating a remote control right of said specific terminal to said remote control terminal to permit an exclusive remote control;
(d) said control server managing data of said remote control right using a remote control right management table; and
(e) said control server permitting said remote control terminal to control said specific terminal using said remote control right management table.

24. The remote control method according to claim 23, wherein said (a) step comprising:
managing terminal data showing whether said control server has a control right of each of said plurality of control object terminals and network data about a connection when said control server controls each of said plurality of control object terminals, and
said (d) comprises:
managing identification data of said remote control terminal; and
managing said remote control right by said remote control terminal for every control object terminal based on said identification data, said terminal data of said remote control terminal and said network data using said remote control right management table.

25. The remote control method according to claim 23 or 24, wherein said (d) step comprises:
said control server registering said remote control rights allocated to said remote control terminal in said remote control right management table in order of reception of said control requests from said remote control terminal.

26. The remote control method according to any of claims 23 to 25, wherein said (b) comprises:
said remote control terminal executing each of a plurality of application programs and issuing said control request to said control server, and
said (c) step comprises:
said control server identifying each of said plurality of application programs uniquely and allocating said remote control right of said specific terminal for every said application program.

27. The remote control method according to any of claims 23 to 26, further comprising:
(f) said control server verifying a user of said remote control terminal and generating verification data,
wherein said (d) step comprises:
said control server registering said verification data of said user on said remote control right management table together with data of said remote control right to permit said exclusive remote control for every said user based on said remote control right management table.

28. The remote control method according to any of claims 23 to 27, further comprising:
(g) said remote control terminal transmitting to said control server, a release time showing a time that said remote control terminal ends said exclusive remote control,
wherein said (d) step comprises:
said control server registering said release time on said remote control right management table such that said control server holds said remote control right until said release time when said release time is registered and releases said remote control right after said release time.

29. The remote control method according to any of claims 23 to 28, wherein said (a) step further comprises:
providing another control server connected with said first network, said other control server having said remote control right of said specific terminal,
said (c) step comprises:
issuing said control server control request to said other control server when said control server receives said control request for said specific terminal;
said other control server allocating said remote control right to said control server; and
said control server allocating said remote control right to said remote control terminal based on said remote control right from said other control server.

30. The remote control method according to any of claims 23 to 29, wherein each of said plurality of control object terminals has a plurality of subunits,
said (c) step comprises:
said control server identifying each of said plurality of subunits of each of said plurality of terminal uniquely and managing said remote control right for every subunit of each of said plurality of control object terminals.

31. The remote control method according to any of claims 23 to 30, wherein said first network is a 1394 network.

32. The remote control method according to any of claims 23 to 31, wherein said second network is an IP network.

33. The remote control method according to any of claims 23 to 32, wherein said other remote control terminal is connected with said second network,
said (c) step comprises:
establishing a point-to-point connection between said specific terminal and said control server when said control server allocates said remote control right to said remote control terminal; and
prohibiting the allocating of said remote control right to said other remote control terminal until said point-to-point connection is released.

34. The remote control method according to any of claims 23 to 32, wherein another remote control terminal is connected with said second network,
said (c) step comprises:
said control server establishing a point-to-point connection between said specific terminal when said control server receives a setting request of the point-to-point connection between said specific terminal and said remote control terminal, allocating the remote control right of the control object terminal to the remote control terminal, and prohibiting allocating of said remote control right to said other said remote control terminal until said point-to-point connection is released.

35. The remote control method according to any of claims 23 to 32, wherein said other remote control terminal is connected with said second network,
said (c) step comprises:
said control server releasing the remote control right of said specific terminal for the point-to-point connection associated with said remote control terminal when said control server receives a release request of the point-to-point connection from said remote control terminal or said remote control terminal ends communication with said control server.
